# EUROPEAN PATENT APPLICATION

(11) **EP 0 625 850 A2**
(43) Date of publication of application: **23.11.1994**
(21) Application number: 94107527.7
(22) Date of filing: 16.05.1994
(51) Int. Cl.: H04N 5/92

(54) **Recording and playback apparatus for digital signals**

(30) Priority: 17.05.1993 JP 114454/93; 20.07.1993 JP 179013/93; 26.07.1993 JP 183712/93; 12.10.1993 JP 254083/93; 12.10.1993 JP 254180/93
(71) Applicant: MATSUSHITA ELECTRIC INDUSTRIAL CO., LTD., Kadoma-shi, Osaka-fu, 571 (JP)
(72) Inventor: Kunihira, Tadashi, Osaka-shi, Osaka (JP); Okamoto, Hiroshi, Nara-shi, Nara (JP); Gotou, Makoto, Nishinomiya-shi, Hyogo (JP); Sakakibara, Yoshio, Neyagawa-shi, Osaka (JP); Inaji, Toshio, Minoo-shi, Osaka (JP); Ueda, Eiji, Katano-shi, Osaka (JP)
(74) Representative: Eisenführ, Speiser & Partner

(57) **Abstract**

A recording playback apparatus has a rotary cylinder in which at least one pair of magnetic heads, one head having a different azimuth from the other, are mounted, a tape-speed control circuit that controls the traveling speed of the magnetic tape wrapped around the rotary cylinder, a magnetic-head selection circuit that selects magnetic heads so that adjacent helical tracks have different azimuths during recording, and a recording circuit that records on the magnetic tape once every n scans of the magnetic heads, where n is an integer such that n ≧ 2, upon recording digital information input at a bit rate equal to (1/m) of a standard bit rate where m is a number equal to or larger than 2.

## Description

### BACKGROUND OF INVENTION

### 1. Field of the Invention

The present invention relates to recording and playback apparatus for digital signals, such as digital VTRs and PCM tape recorders, that compresses digital signals such as video signals, audio signals and the like to record on magnetic tape.

### 2. Description of the Related Art

Of recent years recording and playback apparatus for digital signals compresses a digital signal to record instead of directly recording owing to developments in compression and expansion techniques and error correction techniques. In particular, as described in "The Future of Image Information Recording Technology, Tables 1 and 2, Prototypes of Digital VTRs of Each Company", Television Gakkaishi, Vol. 46, No. 10, pp 1222-1229, video signals are recorded on magnetic tape after digitized and compressed by compression methods such as DCT, DPCM, and ADRC. For example, if an encoded video signal flows at a rate of 115 Mb/s, then these compression methods compress the signal into a signal having a recorded-data rate of 25 Mb/s. As a result, an 8 mm VTR having 2 channels × 2 heads can record the compressed video signal.

Like prior apparatus for analog signals, recording and playback apparatus for digital signals makes its recorded-track pitch in a long-play recording mode narrower than its recorded-track pitch in a standard-play recording mode. Therefore, It requires narrow magnetic heads in the long-play recording mode so that the total number of magnetic heads increases.

Further, if recorded-data rates are different, recording and playback apparatus for digital signals varies the rotational speed of the rotary cylinder and the traveling speed of the magnetic tape in agreement with the recorded-data rate. For example, if the recorded-data rate decreases by 50 %, then the rotational speed of the rotary cylinder and the traveling speed of the magnetic tape are reduced by 50 %.

### SUMMARY OF THE INVENTION

The object of the present invention is therefore to provide a recording and playback apparatus for digital signals that performs recording in the long-play recording mode or at a different bit rate without adding extra magnetic heads and with the same recorded-track pitch as in the standard-play recording mode.

Another object of the present invention is to provide a recording and playback apparatus for digital signals that accommodates a plurality of recorded-data rates without changing the rotational speed of the rotary cylinder and performs high-density recording by azimuth recording.

A further object of the present invention is to provide a recording and playback apparatus for digital signals that plays back all recorded digital information at variable playback speed to obtain almost the same reproduced images as in standard playback.

In order to achieve the aforementioned objective, according to one aspect of the present invention, a recording and playback apparatus for digital signals of the present invention comprises a rotary cylinder that has at least one pair of magnetic heads, one head having a different azimuth from the other, a tape-speed control means that controls the traveling speed of the magnetic tape wrapped around the rotary cylinder, a magnetic-head selection means that selects a magnetic head during recording so that adjacent helical tracks have different recording azimuths, and a recording means that records on the magnetic tape once every n (n ≧ 2, integer) scans of the magnetic heads mounted in the rotary cylinder.

Further the above apparatus has a compression encoding means that compresses and encodes a digital signal to be recorded depending on the traveling speed of the magnetic tape.

By means of the above composition, several pieces of digital information are recorded width almost the same track width without adding magnetic heads, so that tracking does not require strict accuracy. Also, since a plurality of recorded-data rates is accommodated without changing the rotational speed of the rotary cylinder, head touches (contact conditions between a magnetic head and the magnetic tape) are stabilized.

Further, high-density recording is made possible by azimuth recording, and digital information is compressed to record by the compression encoding means depending on the traveling speed of the magnetic tape.

According to another aspect of the present invention, a recording and playback apparatus for digital signals of the present invention comprises a rotary cylinder that has at least one pair of magnetic heads, one head having a different azimuth from the other, a tape-speed control means that controls the traveling speed of the magnetic tape wrapped around the rotary cylinder, a magnetic-head selection means that selects a magnetic head during recording so that adjacent helical tracks have different recording azimuths, a first-mode recording means that moves the magnetic tape at a standard speed by the tape-speed control means and records digital information on the magnetic tape during each scan of the magnetic heads mounted in the rotary cylinder, and a second-mode recording means that records digital information of less amount than for the first mode on the magnetic tape once every n (n ≧ 2, integer) scans of the magnetic heads mounted in the rotary cylinder.

By means of the above composition, the present invention can records with almost the same track width without adding magnetic heads in the second mode where digital information of less amount than for the first mode is recorded. As a result, the tracking accuracy in the second mode can be made the same as in the first mode. Further, since a plurality of recorded-data rates is accommodated without changing the rotational speed of the rotary cylinder, head touches are stabilized. Also, high-density recording is made possible by azimuth recording.

According to a further aspect of the present invention, a recording and playback apparatus for digital signals of the present invention comprises a rotary cylinder that has at least one pair of magnetic heads, one head having a different azimuth from the other, a tape-speed control means that controls the traveling speed of the magnetic tape wrapped around the rotary cylinder, a magnetic-head selection means that selects a magnetic head during recording so that adjacent helical tracks have different recording azimuths, a bit-rate conversion means that converts input signals of several bit rates into digital information of a predetermined recording bit rate, and a recording means that records digital information and system information once every n (n is a positive integer) scans of the magnetic heads depending on the bit rates of the input signal.

By means of the above composition, input signals having a plurality of bit rates are accommodated without changing the rotational speed of the rotary cylinder, so that head touches are made good. Also, since input signals of several bit rates are converted into signals having a unique recording bit rate, the bit rate between the magnetic head and magnetic tape is made constant or almost constant during recording and playback. As a result, the frequency characteristics (filter constant, equalizer constant) of a head amp do not have to be changed depending on the bit rate of the input signal, that is, a plurality of bit rates can be accommodated without changing the circuitry of head amps. As a result, input signals of different bit rates can be recorded with a simple composition. Moreover, since the system information on recording is recorded at the same time, the system can be controlled based on the information during playback, and the system conditions can easily be restored.

According to a further aspect of the present invention, a recording and playback apparatus for digital signals of the present invention comprises a rotary cylinder that has at least one pair of magnetic heads, one head having a different azimuth from the other, a tape-speed control means that controls the traveling speed of the magnetic tape wrapped around the rotary cylinder, a recording mode in which digital information is recorded once every n (n ≧ 2, integer) scans and the magnetic tape is moved at a predetermined speed by the tape-speed control means so that successively recorded two tracks become contiguous to each other, a playback mode in which the rotational speed of the rotary cylinder is made almost the same as in the recording mode, and digital information is played back during each scan of the magnetic heads, and a magnetic-head selection means that selects a magnetic head that scans in the recording and playback modes.

By means of the above composition, all the digital information recorded on the magnetic tape is played back during variable-speed playback, so that a compressed signal is completely expanded, and image quality equivalent to an image reproduced in the standard-play recording mode can be obtained. Further, information recorded on tracks can be played back at up to n/2 times the recording speed during one scan, so that processing such as rearrangement of blocks becomes unnecessary, and signal processing is simplified. Moreover, information recorded on tracks can be played back at up to n times the recording speed independently of tracking, so that tracking of high accuracy is not required.

In order to achieve above each object, two pairs of magnetic heads are mounted in the rotary cylinder, one head having a different azimuth from the other and one pair being positioned 180 degrees from the other, and recording is made on the magnetic tape once every n (n ≧ 3, odd number) scans of the magnetic heads, so that the objective of the present invention is realized by a simplest composition of the cylinder.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a block diagram of a recording and playback apparatus for digital signals of a first embodiment in accordance with the present invention;
Figs. 2A and 2B are views for describing the azimuths of magnetic heads mounted in the rotary cylinder of a recording and playback apparatus for digital signals in accordance with the present invention, respectively;
Fig. 3 shows a block diagram of the compression encoding circuit shown in Fig. 1;
Fig. 4 is a timing chart for describing a recording operation of the first embodiment;
Fig. 5 is a timing chart for describing another recording operation of the first embodiment;
Fig. 6 shows a composition of the rotary cylinder of the first embodiment;
Fig. 7 is a timing chart for describing another recording operation of the first embodiment;
Fig. 8 is a block diagram of a recording and playback apparatus for digital signals of a second embodiment in accordance with the present invention;
Fig. 9 is a timing chart for describing the recording operation in the first mode of the second embodiment;
Fig. 10 is a timing chart for describing the recording operation in the second mode of the second embodiment;
Fig. 11 is a block diagram of a recording and playback apparatus for digital signals of a third embodiment in accordance with the present invention;
Fig. 12 is a timing chart for describing the operation in a recording mode of the third embodiment;
Fig. 13 is a timing chart for describing the operation in another recording mode of the third embodiment;
Fig. 14 is a timing chart for describing the operation in another recording mode of the third embodiment;
Figs. 15A, 15B and 15C, respectively, show track patterns for describing the system information area in the third embodiment;
Fig. 16 is a playback block diagram of a recording and playback apparatus for digital signals of the third embodiment;
Fig. 17 is a timing chart for describing the operation in a playback mode of the third embodiment;
Fig. 18 is a playback block diagram of a recording and playback apparatus for digital signals of a fourth embodiment in accordance with the present invention;
Fig. 19 is a timing chart for describing the operation in a playback mode of the fourth embodiment;
Fig. 20 is a timing chart for describing the operation in another playback mode of the fourth embodiment;
Fig. 21 is a timing chart for describing the operation in another playback mode of the fourth embodiment;
Fig. 22 is a timing chart for describing the operation in another playback mode of the fourth embodiment; and
Fig. 23 is a timing chart for describing the operation in another playback mode of the fourth embodiment.

### DETAILED DESCRIPTION OF THE PREFERRED EMBODIMENTS

The preferred embodiments according to the present invention will be described below with reference to the attached drawings.

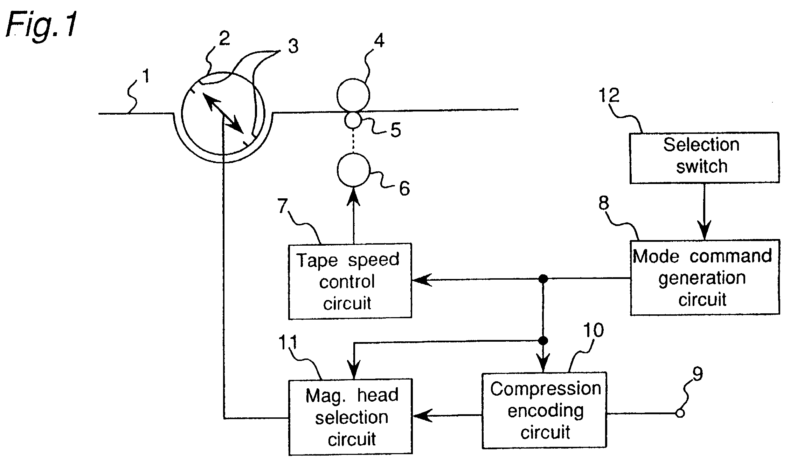

Fig. 1 shows a block diagram of a recording and playback apparatus for digital signals of a first embodiment in accordance with the present invention. In Fig. 1, 1 is magnetic tape, 2 is a rotary cylinder, 3 is magnetic heads, that is, two pairs of magnetic heads (R1, L1) and (R2, L2) mounted in rotary cylinder 2, where Ri have azimuth R, and Li have azimuth L, and (R1, L1) are positioned opposite to (R2. L2) at an angle of 180 degrees.

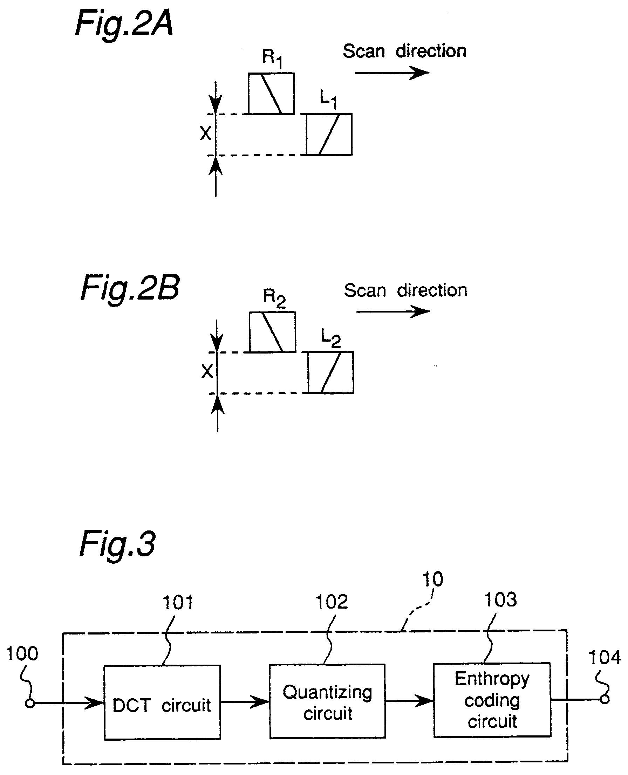

Fig. 2A shows an example of set azimuths of the pair (R1, L1) of magnetic heads, and Fig. 2B shows an example of set azimuths of the pair (R2, L2) of magnetic heads. As shown from these figures, the azimuths of R1 and R2 are the same, and the azimuths of L1 and L2 are the same. As shown in Figs. 2A and 2B, the magnetic heads R1 and L1 are positioned shifted away from each other by a level difference x in the rotary cylinder, and the heads R2 and L2 are positioned shifted away from each other by the level difference distance x. This level difference x is set so that the widths of tracks formed on the magnetic tape during recording become one desired track-pitch.

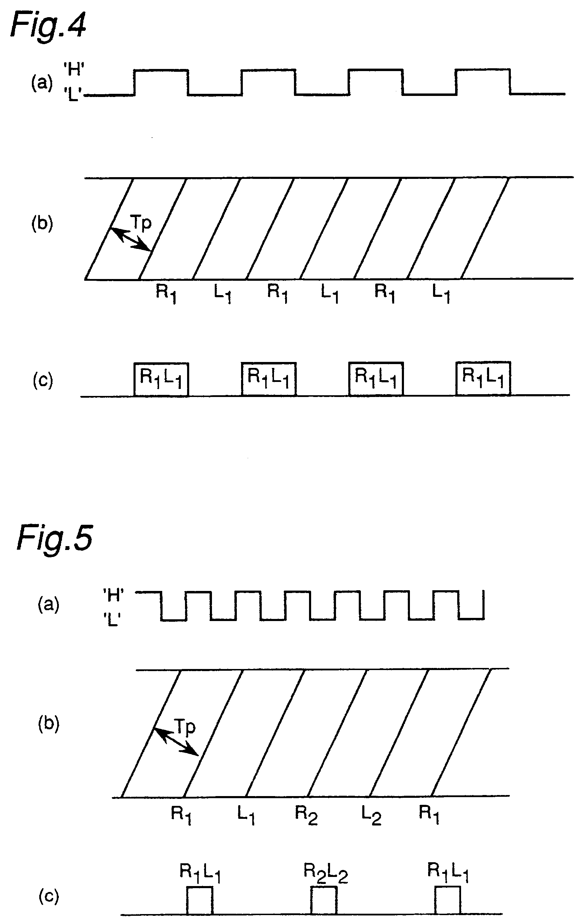

Returning to Fig. 1, 4 is a pinch roller, 5 is a capstan, 6 is a capstan motor, 7 is a tape-speed control circuit, 8 is a mode command generation circuit for generating a compression mode command responsive to operation of a selection switch 12, 9 is an input terminal for digital information, 10 is a compression encoding circuit, and 11 is a magnetic-head selection circuit.

The operations of a recording and playback apparatus for digital signals composed as above are described in the following with reference to Fig. 1.

In Fig. 1, magnetic tape 1 is wrapped around rotary cylinder 2 at an angle of about 180 degrees but in an oblique direction, and moved by pinch roller 4 and capstan 5. Tape-speed control circuit 7 controls the rotational speed of capstan motor 6 following a compression-instruction signal input through the compression-mode command generation circuit 8, so that the traveling speed of magnetic tape 1 becomes a predetermined velocity. Further, compression encoding circuit 10 compresses digital information input through the digital-information input terminal 9 following the compression-mode command from mode command generation circuit 8. Magnetic-head selection circuit 11 selects a magnetic head from magnetic heads 3 so that the azimuths of adjacent recorded tracks of magnetic tape 1 on which information compressed by compression encoding circuit 10 is recorded become different.

Fig. 3 shows an example of the composition of compression encoding circuit 10. During recording, a digital signal input through a terminal 100 is first transformed from values of a time domain into values of a frequency domain by a DCT (discrete cosine transform) circuit 101. Next, the transformed values are input to a quantization circuit 102 to be quantized. Further, the quantized values are treated by entropy encoding circuit 103, to be encoded. Compression encoding circuit 10 compresses digital information at a compression ratio indicated by the compression-mode command. Compression of digital information is realized by at least one of DCT circuit 101, quantization circuit 102, and entropy encoding circuit 103. Next, the compressed digital signal is output through a terminal 104. During playback, the reverse operation of the compression operation during recording is performed. The DCT (discrete cosine transform) was used as part of a quantization means in the above description. However, other quantization means such as vector quantization can be used. Also, standardized image-compression data, such as moving-picture compression data standardized by the MPEG (Moving Picture Expert Group) can be dealt with as compressed digital information.

Figs. 4 and 5 show timing during recording when a digital signal is recorded. In these Figs., (a) denotes a head-switching signal, (b) denotes recorded tracks, and (c) denotes used magnetic heads and recording intervals. Fig. 4 is a timing chart in a recording mode. Magnetic-head selection circuit 11 selects R1 and L1 of magnetic heads 3, which perform recording, at an interval when the head-switching signal is at "H". Magnetic-head selection circuit 11 does not select any magnetic heads at an interval when the head-switching is at "L", so that recording is not performed. Therefore, digital information input through digital-information input terminal 9 is recorded on magnetic tape 1 using one pair of magnetic heads (R1, L1) in one side of rotary cylinder 2, that is, while rotary cylinder 2 makes one revolution, two tracks are continuously recorded with track width Tp. The traveling speed of magnetic tape 1 is set by tape-speed control circuit 7 so that two tracks are formed while rotary cylinder 2 makes one revolution. Since the azimuth of a track being recorded is different from the azimuth of its adjacent tracks, recording can be made without any gap between adjacent tracks, so that high-density recording is realized.

Fig. 5 is a timing chart in another recording mode (long-play recording mode), where the amount of recorded digital information is 1/2.5 the one in the recording mode of Fig. 4. In order to change the amount of recorded digital information into its 1/2.5, it is necessary that either the amount of information of the signal input through compression-mode command generation circuit 9 is made into its 1/2.5 or the digital information of the signal input through compression-mode command generation circuit 9 is compressed by compression encoding circuit 10 into its 1/2.5.

In the present recording mode, two pairs of magnetic heads (R1, L1) and (R2, L2) alternately record two tracks at the same time while rotary cylinder 2 makes 2.5 revolutions. Therefore, as shown in (c) of Fig. 5, magnetic- head selection circuit 11 selects (R1, L1) of magnetic heads 3 so that digital information is recorded on magnetic tape 1, and after 2.5 revolutions of rotary cylinder 2, magnetic-head selection circuit 11 selects (R2, L2) of magnetic heads 3, which perform recording. Next, after 2.5 revolutions of rotary cylinder 2, (R1, L1) of magnetic heads 3 perform recording. By repeating these operations, continuous recorded tracks are formed on magnetic tape 1.

The traveling speed of magnetic tape 1 is 1/2.5 the tape speed in the recording mode of Fig. 4, since the amount of recorded information is 1/2.5. The rotational speed of rotary cylinder 2 is the same as in the recording mode of Fig. 4. Since two tracks are recorded, while rotary cylinder 2 makes 2.5 revolutions, recorded tracks are recorded on magnetic tape 1 with track width Tp without any gap between adjacent tracks as in Fig. 4. In this way, recording is performed once while rotary cylinder 2 makes 2.5 revolutions, that is, magnetic heads 3, (R1, L1) and (R2, L2), make 5 scans in all. Also, since (R1, L1) and (R2, L2) of magnetic heads 3 alternately perform recording, the azimuths of adjacent recorded tracks are different, as clear from Figs. 2A and 2B.

Next, the operations of playback in the present embodiment are described.

In case of playing back a signal recorded in the recording mode of Fig. 4, magnetic heads 3 can play back the same recorded tracks twice, so that a recorded digital signal can be obtained by collecting pieces of reproduced information having greater S/N ratios and by rearranging them. Therefore, in this case, tracking of high accuracy is not necessary during playback.

Further, in the recording mode of Fig. 5, since magnetic heads 3 scan 5 times in all, a recorded signal is reproduced without loss of information at a speed of up to 2.5 times the recording speed, where magnetic heads 3 play back each track twice. In general, if recording is performed once while magnetic heads 3 make n scans, playback can be performed without rigorous tracking at a playback speed up to n/2 the recording speed, at which at least two scans are made during playback. Therefore, the speed of data transfer during playback can be made n/2 the speed of data transfer during recording, so that data transfer to other recording media such as a disk recording medium can be performed at high speed. Further, reproduced digital data can be temporarily stored in a memory, and only desired data can be output. For example, in image data, stroboscopic playback is made possible.

Further, since the rotational speed of rotary cylinder 2 does not vary depending on the amount of digital information, the relative speed between magnetic tape 1 and magnetic heads 3 can be almost constant, and conditions on the contact between magnetic heads 3 and magnetic tape 1, that is, head touches can be made uniform independently of recording modes. Therefore, recording on and playback from magnetic tape 1 of a signal is performed well.

In the present embodiment, magnetic heads 3 mounted in rotary cylinder 2 consist of two pairs of heads, one pair positioned opposite to the other at an angle of 180 degrees. However, one head can be used in place of a pair of heads. Also, two pairs can be mounted in one position in stead of diametrically opposite positions.

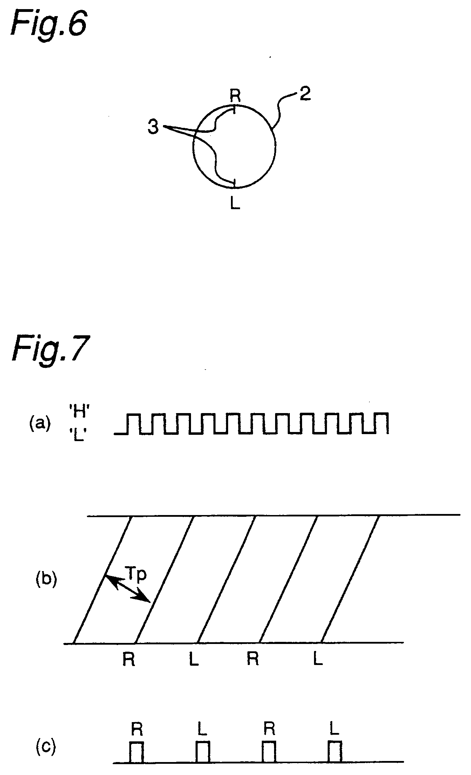

Fig. 6 shows a rotary cylinder in which two magnetic heads having different azimuths are positioned opposite to each other at an angle of 180 degrees. Fig. 7 shows timing during recording in case this rotary cylinder is used and the amount of recorded digital information is 1/5 the amount of original digital information. In Fig. 7, (a) denotes a head-switching signal, (b) denotes recorded tracks, and (c) denotes used magnetic heads and their recording intervals. As in Figs. 4 and 5, heads R and L of magnetic heads 3 positioned opposite to each other at an angle of 180 degrees alternately perform recording, while rotary cylinder 2 makes 2.5 revolutions, that is, 5 scans. In case of the head composition of Fig. 6, the azimuths of adjacent tracks can be made different by recording once every odd scans.

In the above description, basic circuits required for recording and playback of digital signals, such as modulators, decoders, recording amps, and playback amps are not shown in Figures and not explained, and only necessary part for describing the present embodiment is explained.

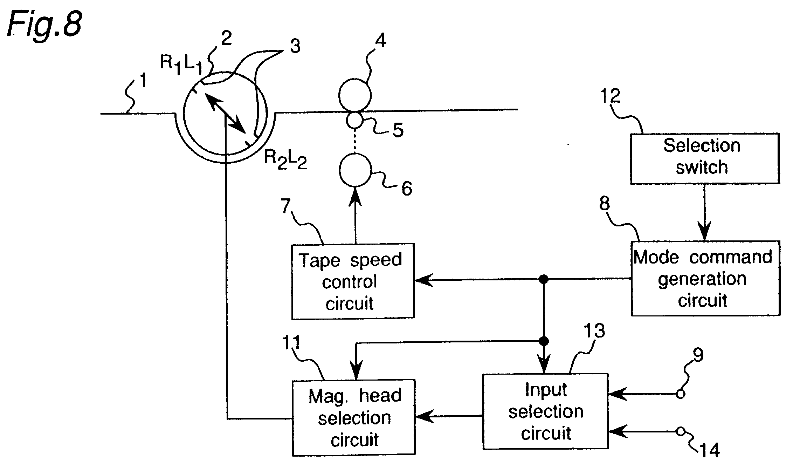

Fig. 8 shows a block diagram of a recording and playback apparatus for digital signals of a second embodiment in accordance with the present invention. Fig. 8 differs from Fig. 1 in that, an input selection circuit 13, and a digital-information input terminal 14 for a second mode are added, and compression encoding circuit 10 is deleted. A recording mode is set by mode command generation circuit 8, and the set mode signal is input to tape-speed control circuit 7, input selection circuit 13, and magnetic-head selection circuit 11. A digital-information input terminal 9 for a first mode and a digital-information input terminal 14 for a second mode are connected to input selection circuit 13.

The operations of the recording and playback apparatus composed as above are described in the following.

The operations of Fig. 8 differ from Fig. 1 in that a recording mode is set by mode command generation circuit 8, and input selection circuit 13 selects an input signal applied to digital-information input terminal 9 in a first mode. Magnetic-head selection circuit 11 selects a head of magnetic heads 3 so that the selected head performs recording during each scan. Further, tape-speed control circuit 7 controls the rotational speed of capstan motor 6 so that the traveling speed of magnetic tape 1 becomes a predetermined one. Also, if a second mode is set by mode command generation circuit 8, input selection circuit 13 selects an input signal applied to digital-information input terminal 14, and magnetic-head selection circuit 11 selects a head of magnetic heads 3 so that magnetic heads 3 perform recording once every n scans and the azimuths of adjacent recorded tracks become different. In this case, if the amount of digital information input through digital-information input terminal 14 is 1/n the amount of digital information input through digital-information input terminal 9, then tape-speed control circuit 7 sets the traveling speed of the magnetic tape at 1/n the one in the first mode.

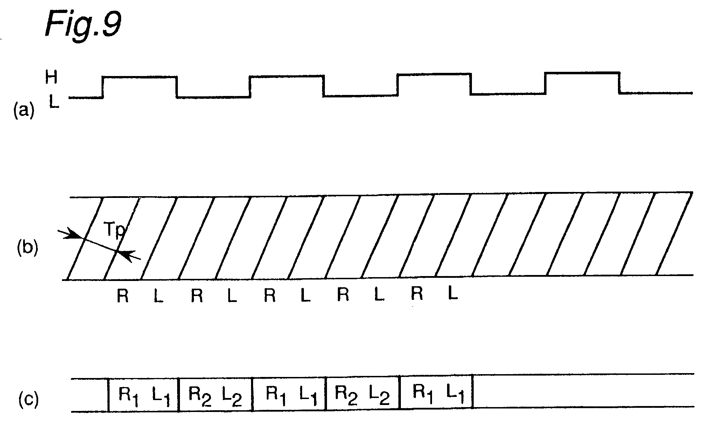

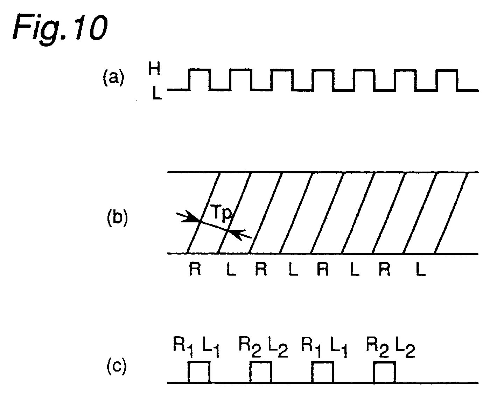

Timing during recording a digital signal is shown in Figs. 9 and 10, where (a) denotes a head-switching signal, (b) denotes recorded tracks, and (c) denotes used heads and their intervals of recording.

Fig. 9 is a timing chart in the first recording mode (standard-play recording mode). R1 and L1 of magnetic heads 3 are selected by magnetic-head selection circuit 11 for recording at the intervals where the head-switching signal is at "H", and R2 and L2 of magnetic heads 3 are selected for recording at the intervals where the head-switching signal is at "L". Therefore, digital information input through digital-information input terminal 9 is recorded continuously on magnetic tape 1 using all the heads of magnetic heads 3, so that 4 tracks (R1, L1, R2, L2) are continuously recorded with track width Tp while rotary cylinder 2 makes one revolution. The traveling speed of magnetic tape 1 is set by tape-speed control circuit 7 so that 4 tracks are recorded while rotary cylinder 2 makes one revolution. Since the azimuths of adjacent recorded tracks are different, recording can be made without any gap between adjacent tracks, so that high-density recording is made possible.

Fig. 10 is a timing chart in the second recording mode (long-play recording mode), in which the amount of digital information is 1/3 the amount of information for the first recording mode, and the amount of information of a signal input through digital-information input terminal 14 is 1/3 the amount for the first mode.

In this case, recording is performed while rotary cylinder 2 makes 1.5 revolutions, and the traveling speed of magnetic tape 1 becomes 1/3 the standard speed, since the amount of recorded information becomes 1/3 the amount for the first mode.

Since the rotational speed of rotary cylinder 2 is constant, two tracks are recorded on magnetic tape 1 while rotary cylinder 2 makes 1.5 revolutions. Therefore, as shown in (c) of Fig. 10, magnetic-head selection circuit 11 first selects (R1, L1) of magnetic heads 3, which perform recording. Next, after 1.5 revolutions of rotary cylinder 3, magnetic-head selection circuit 11 selects (R2, L2) of magnetic heads 3, which perform recording, and then, after 1.5 revolutions of rotary cylinder 3, magnetic-head selection circuit 11 selects (R1, L1) of magnetic heads 3, which perform recording. By repeating in this way, continuous recorded tracks are formed. In short, magnetic-head pairs (R1, L1) and (R2, L2) of magnetic heads 3 alternately perform recording once every 1.5 revolutions of rotary cylinder 2.

The traveling speed of magnetic tape 1 is 1/3 the tape speed in Fig. 9, since the amount of recorded information is 1/3 the amount for the first mode. Since the rotational speed of rotary cylinder 2 is constant, recording is continuously performed with the same track width Tp and without any gap between adjacent tracks as in Fig. 9 by recording two tracks while rotary cylinder 2 makes 1.5 revolutions. Recording is performed once while rotary cylinder 2 makes 1.5 revolutions, that is, while head pairs (R1, L1) and (R2, L2) of magnetic heads 3 scan three times in all. Since (R1, L1) and (R2, L2) are used alternately, the azimuths of adjacent tracks are different.

Next, the playback operations are described in the following.

In the standard-play recording mode, recorded tracks are scanned during playback once by magnetic heads 3 as during recording.

In the second mode, the amount of digital information becomes 1/n the amount for the first mode, so that, as in the first embodiment, tracking of high accuracy is not required during playback. Further, high-speed playback at up to n/2 times the standard speed is possible without loss of information.

Further, since the rotational speed of rotary cylinder 2 is the same in the standard-play recording mode and in the long-play recording mode, the relative speed between magnetic tape 1 and magnetic heads 3 can be made almost the same. Therefore, conditions on the contact between magnetic heads 3 and magnetic tape 1 (head touches) can be made uniform independently of recording modes. Therefore, recording of a signal on magnetic tape 1 is performed well.

In the present embodiment, magnetic heads 3 mounted in rotary cylinder 2 consist of two pairs of heads, one pair positioned opposite to the other at an angle of 180 degrees. However, one head can be used in place of a pair of heads. Also, two pairs can be mounted in one position in stead of diametrically opposite positions.

Further, the second mode described above may be a plurality of modes.

In the above description, the traveling speed of magnetic tape 1 was changed depending on the amount of digital information in the second mode. However, if the tape speed is the same as in the first mode, then only gaps between adjacent recorded tracks occur, and the recording and playback apparatus works well without any problems.

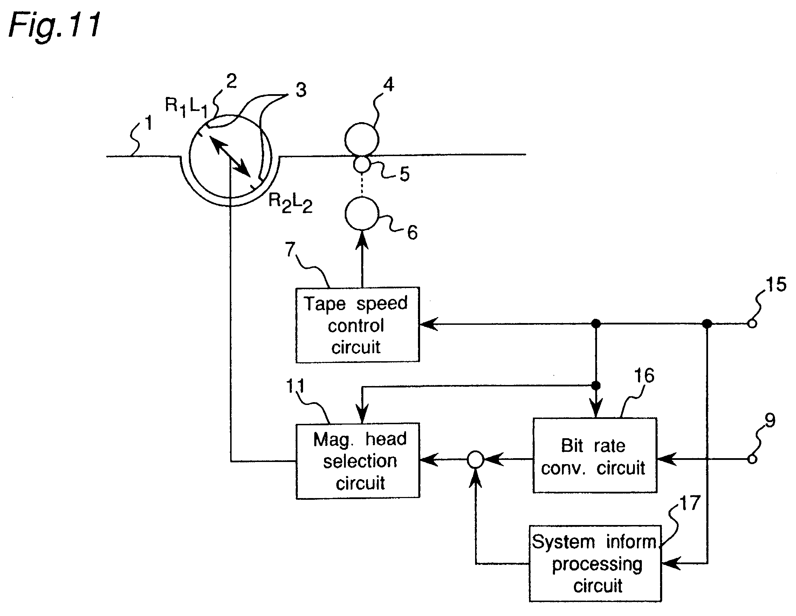

Fig. 11 shows a block diagram of a recording and playback apparatus for digital signals of a third embodiment in accordance with the present invention. Fig. 11 differs from Fig. 8 in that a rate instruction terminal 15, a bit-rate conversion circuit 16, and a system-information processing circuit 17 are added, and mode command generation circuit 8 and input selection circuit 13 are deleted. A recording bit rate is set through rate instruction terminal 15 and an instruction signal of the set bit rate is input to tape-speed control circuit 7, bit-rate conversion circuit 16, system-information processing circuit 17, and magnetic-head selection circuit 11. In Fig. 11, magnetic heads 3 mounted in rotary cylinder 2 are magnetic-head pairs (R1, L1) and (R2, L2), which are positioned opposite to each other at an angle of 180 degrees. Here, the relative heights of magnetic heads R1, L1, R2, L2 are set so that they are at the same height on the recorded pattern.

Bit-rate conversion circuit 16 converts the bit rate of digital information input through digital-information input terminal 9 into a predetermined recording bit rate by varying the frequencies of the write-clock and read-clock using a memory (not shown in Fig. 11) wherein a Table for designating an operation mode based on the system information input through the input terminal 15.

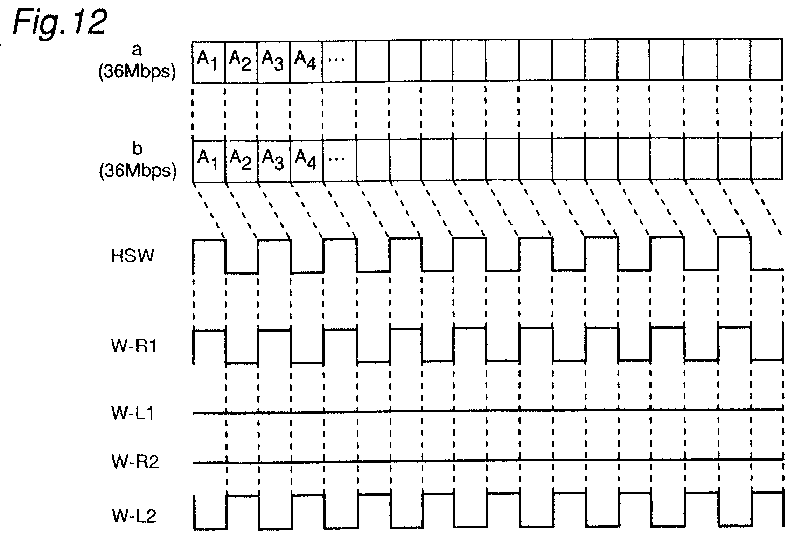

The operations of the third embodiment are described in the following with reference to Figs. 11, 12, 13, and 14. Figs. 12, 13, and 14 are recording timing charts that show the operations of a recording and playback apparatus for digital signals of the present invention, in case recording is performed converting the bit rate of an input signal into a recording bit rate.

In Figs. 12, 13, and 14, (a) denotes an input signal, (b) denotes a signal obtained from converting the bit rate of the input signal by bit-rate conversion circuit 16. Each of the blocks Ai, Bi shows a piece of data which can be recorded during one scan of magnetic heads 3. HSW denotes a head-switching signal for the magnetic-head pairs 3a = (R1, L1) and 3b = (R2, L2) and expresses phases of rotation of rotary cylinder 2. Magnetic-head recording signals, W-R1, W-L1, W-R2, and W-L2 are respectively expressing timing of recording by magnetic heads, R1, L1, R2, and L2, and are created by magnetic-head selection circuit 11. For example, a magnetic head performs recording at intervals when its recording signal is at "H".

In Fig. 12, the bit rate of the input signal (about 36 Mbps) is almost the same as the recording bit rate (about 36 Mbps). In this case, the bit-rate conversion by bit-rate conversion circuit 16 is not performed, and the input signal is recorded, as it is, on magnetic tape 1 by magnetic heads 3.

Specifically, the block A1 of the input signal (a) becomes the block B1 of the recorded signal via bit-rate conversion circuit 16. The block B1 of the recorded signal (b) is recorded at an immediate interval of the HSW signal, which is at "L", When the HSW signal is at "L", the magnetic-head recording signal W-L2 is at "H", so that the head L2 of the magnetic-head pair 3b is selected by magnetic-head selection circuit 11, and the magnetic head L2 records the block B1 of the recorded signal (b).

Similarly, the block A2 of the input signal (a) becomes the block B2 of the recorded signal. The block B2 of the recorded signal (b) is recorded at an immediate interval of the HSW signal, which is at "H", When the HSW signal is at "H", the magnetic-head recording signal W-R1 is at "H", so that the magnetic head R1 of the magnetic-head pair 3a records the block B2. The blocks A3, A4, ... are recorded similarly. In this way the azimuths of adjacent tracks are made different, so that high-density recording without guard bands is made possible.

The traveling speed of magnetic tape 1 is set by tape-speed control circuit 7 controlling the rotational speed of capstan motor 6 so that recorded tracks become continuous.

In Fig. 12, since the bit rates of the input signal (a) and the recorded signal (b) are the same, recording is performed without the conversion of the bit rate by bit-rate conversion circuit 16. Also, magnetic heads 3 perform recording during each scan.

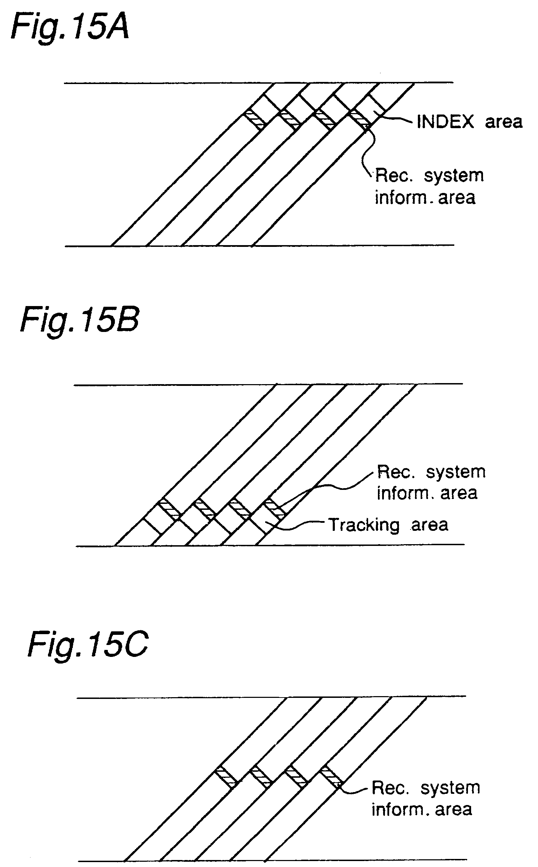

System information on recording is recorded at the same time when the digital information is recorded. Figs. 15A, 15B and 15C respectively show track patterns realized when system information is recorded on magnetic tape 1 by system-information processing circuit 17. Fig. 15A shows a track pattern in case system information is recorded near the ID area. Fig. 15B shows a track pattern in case system information is recorded near the tracking area. Fig. 15C shows a track pattern in case system information is recorded at almost the middle of a track.

The ID area is important, in which data necessary for searching and the like are usually stored. Therefore, if system information is recorded near the ID area, then system information is reproduced as ID information, and the mode during can be determined based on the system information.

The tracking area, in which tracking information is stored is also important. If system information is recorded near the tracking area, then if tracking information can be reproduced, then system information can also be reproduced, and the mode during playback can be determined based on the system information.

If system information is recorded in the middle of a track, then since the middle part is less affected by flaws, track bending, and the like than in a tape-edge part, system information can be reproduced more accurately.

If the scanning information of magnetic heads 3, that is, information about once how many scans the magnetic heads performed recording, is recorded as system information, then the traveling speed of the magnetic tape and the number of scans required for recording one track are obtained during playback. Therefore, the conditions on playback can be made the same as on recording.

If the tape-speed information, that is, the traveling speed of magnetic tape 1, is recorded as system information, then by comparing with the traveling speed of magnetic tape 1 in case recording is performed during each scan of magnetic heads 3, information about once how many scans magnetic heads 3 performed recording is obtained. Therefore, the conditions on playback can be made the same as on recording. For example, if the tape speed recorded as system information is 1/4 the tape speed for recording during each scan, then recording was performed once every 4 scans in the recording mode. In this way the conditions on recording can be restored.

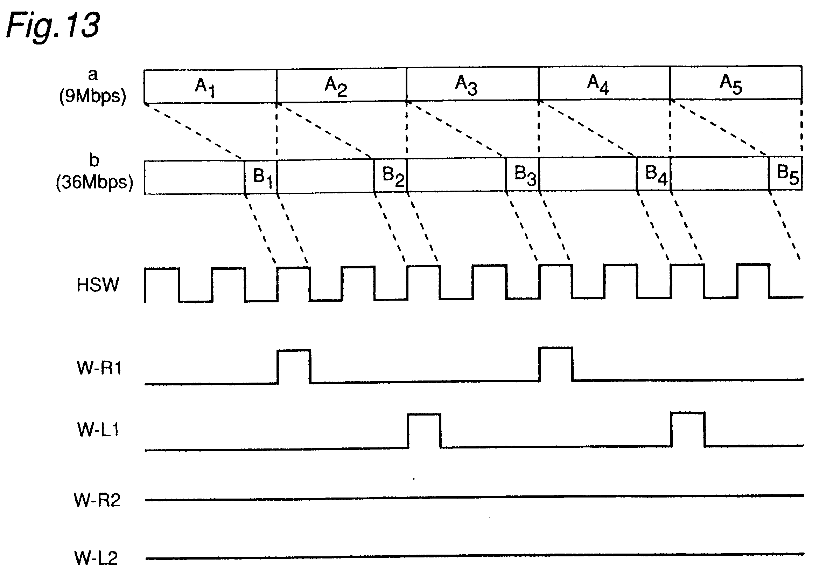

In Fig. 13, the bit rate (about 9 Mbps) of the input signal and the bit rate (about 36 Mbps) of the recorded signal are different, so that bit-rate conversion circuit 16 converts the bit rate of the input signal into the bit rate of the recorded signal (9 Mbps → 36 Mbps). Therefore, after the input signal is time-compressed into its 1/4, the converted signal is recorded on magnetic tape 1 once every 4 scans of the magnetic heads. Therefore, controlled by tape-speed control circuit 7, the traveling speed of magnetic tape 1 is slowed down into 1/4 of the traveling speed in Fig. 12.

The block A1 of the input signal (a) becomes the block B1 of the recorded signal (b) via bit-rate conversion circuit 16, that is, time compression is performed. The block B1 of the recorded signal (b) is recorded at an immediate interval of the HSW signal, which is at "H". At this interval, the magnetic-head recording signal W-R1 is at "H", so that the head R1 of the magnetic-head pair 3a is selected by magnetic-head selection circuit 11, and the magnetic head R1 records the block B1 of the recorded signal (b).

Similarly, the block A2 of the input signal (a) becomes the block B2 of the recorded signal. The block B2 of the recorded signal (b) is recorded at an immediate interval of the HSW signal, which is at "H". At this interval the magnetic-head recording signal W-L1 is at "H", so that the magnetic head L1 of the magnetic-head pair 3a records the block B2. The blocks A3, A4, ... are recorded similarly. In this way the azimuths of adjacent tracks are made different, so that high-density recording without guard bands is made possible.

The blocks B1 and B2 of the recorded signal are performed intermittently. Specifically, recording is performed once every 4 scans of magnetic heads 3, that is, while rotary cylinder 2 makes two revolutions. Recording for the blocks A3, A4, A5 of the input signal are similarly intermittently performed.

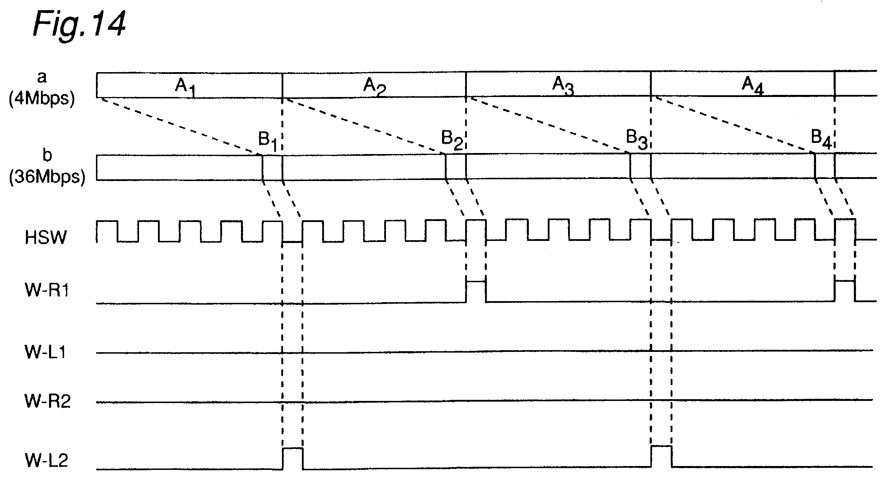

Similarly, in Fig. 14, the bit rate (about 4 Mbps) of the input signal and the bit rate (about 36 Mbps) of the recorded signal are different, so that bit-rate conversion circuit 16 converts the bit rate of the input signal into the bit rate of the recorded signal (4 Mbps → 36 Mbps). Since the input signal is time-compressed into its 1/9, recording is performed once every 9 scans of magnetic heads 3. Therefore, controlled by tape-speed control circuit 7, the traveling speed of magnetic tape 1 is slowed down into 1/9 of the traveling speed in Fig. 12.

The block A1 of the input signal (a) becomes the block B1 of the recorded signal (b) via bit-rate conversion circuit 16, that is, time compression is performed. The block B1 of the recorded signal (b) is recorded at an immediate interval of the HSW signal, which is at "L". At this interval, the magnetic-head recording signal W-L2 is at "H", so that the head L2 of the magnetic-head pair 3b is selected by magnetic-head selection circuit 11, and the magnetic head L2 records the block B1 of the recorded signal (b).

Similarly, the block A2 of the input signal (a) becomes the block B2 of the recorded signal. The block B2 of the recorded signal (b) is recorded at an immediate interval of the HSW signal, which is at "H". At this interval the magnetic-head recording signal W-R1 is at "H", so that the magnetic head R1 of the magnetic-head pair 3a records the block B2. In this way the azimuths of adjacent tracks are made different, so that high-density recording without guard bands is made possible.

The blocks B1 and B2 of the recorded signal are recorded intermittently. Specifically, recording is performed once every 9 scans of magnetic heads 3, that is, while rotary cylinder 2 makes 4.5 revolutions. Recording for the blocks A3, A4 of the input signal (a) are similarly intermittently performed.

As described above, if the bit rate of the input signal is lower than the bit rate of the recorded signal, bit-rate conversion circuit 16 adjusts the bit rate of the input signal to the bit rate of the recorded signal, and recording is performed once every several scans of magnetic heads 3, so that the bit rate of the recorded signal is made constant, and recording depending on the bit rate of the input signal is performed.

Further, cases where the ratio between the bit rate of the input signal and the bit rate of the recorded signal is not a whole number are accommodated by varying the length of recorded tracks.

Next, the playback operations that play back signals recorded in these ways are described in the following.

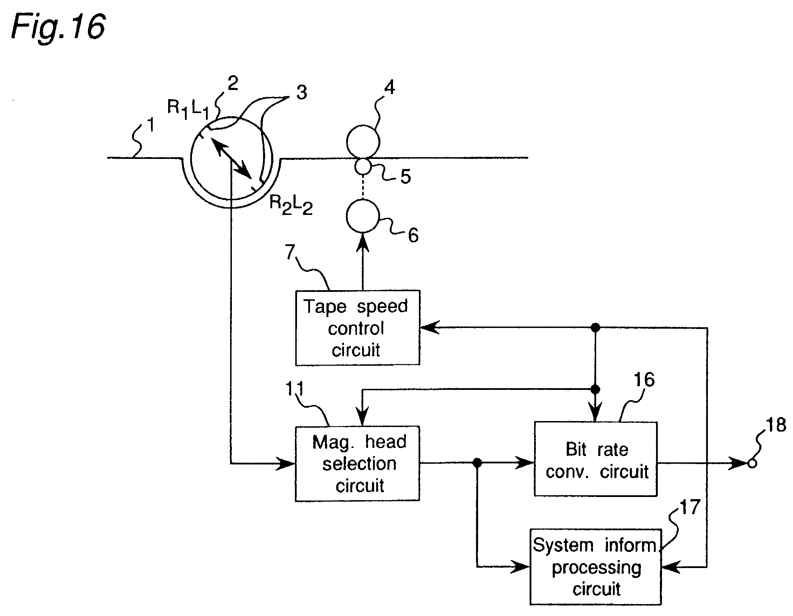

Fig. 16 is a playback block diagram of a recording and playback apparatus for digital signals of the third embodiment. If a component has the same function as in Fig. 11, the same symbol is used to denote it, and its redundant description is omitted.

In Fig. 16, magnetic-head selection circuit 11 selects a magnetic head to be used from the magnetic-head pairs 3a and 3b, and the output signal reproduced by the selected head is input to bit-rate conversion circuit 16, which converts the reproduced signal so that its bit rate is changed from the bit rate of the recorded signal into the bit rate of the original input signal. Then bit-rate conversion circuit 16 outputs the converted signal through output terminal 18. The reproduced system information is processed by system-information processing circuit 17, and a playback mode is set.

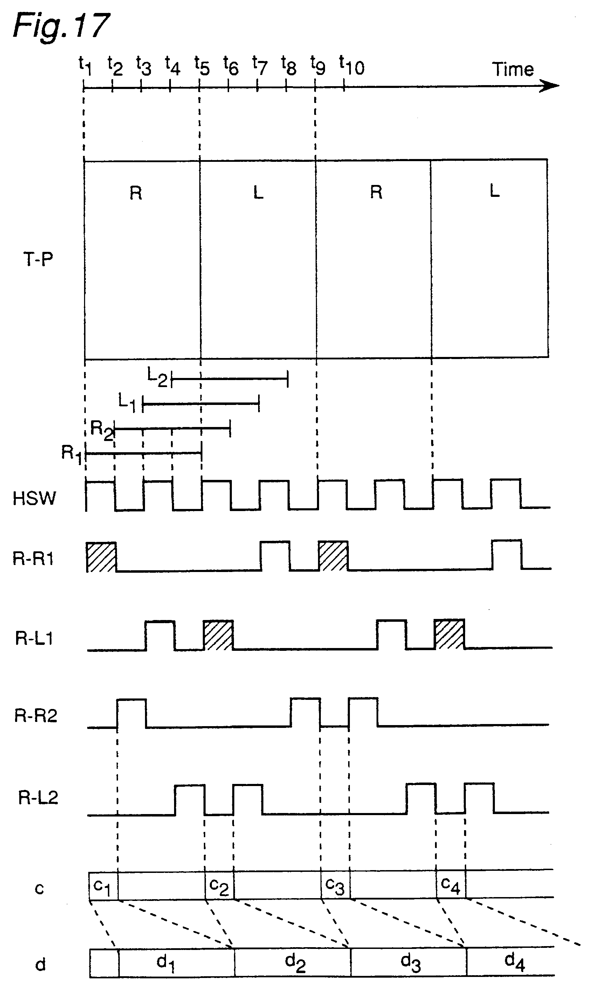

Fig. 17 shows the timing of the operation in a playback mode and the track pattern on the magnetic tape traced by magnetic heads in a recording and playback apparatus for digital signals of the present embodiment.

In Fig. 17, T-P denotes recorded tracks. HSW denotes a head-switching signal corresponding to the magnetic-head pairs 3a, 3b and expresses phases of rotation of rotary cylinder 2. Signals R-R1, R-L1, R-R2, and R -L2 respectively express the timing of playback by the corresponding heads, R1, L1, R2, and L2, and each magnetic head is used for playback when the corresponding signal is at "H". (c) denotes signal blocks reproduced at the recorded bit rate, and (d) denotes signal blocks obtained after the bit rate is converted into the bit rate of the original digital signal.

Fig. 17 shows playback in case an input signal of 9 Mbps was recorded at a recorded bit rate of 36 Mbps. At time t1, since the R-R1 signal is at "H", the magnetic head R1 of the magnetic-head pair 3a is used for playback. At time t2, since the R-R2 signal is at "H", the magnetic head R2 of the magnetic-head pair 3b is used for playback. Similarly, at the time interval between time t3 and time t6, the magnetic head L1 of the magnetic-head pair 3a and the magnetic head L2 of the magnetic-head pair 3b are used for playback. Here, the same track is scanned several times (4 times), but only a reproduced signal such that the recorded digital information is normally played back by a scan as a reproduced signal is used. In this case, the first R-azimuth track is played back by the head R1 at time t1. The next L-azimuth track is played back by the head L1 at time t5.

If the mode during playback is different from the mode during recording, then the mode during playback is made the same as during recording by reproducing the system information recorded on tracks to obtain information about the recording. If the mode during playback and the mode during recording are different, then by making the mode during playback the one such that the tape speed in that mode is the slowest, the number of scanning times by magnetic heads 3 is maximized, so that the recorded system information is easily obtained.

If a correct mode during playback is unknown, the switching of magnetic heads 3 can be determined by comparing the output of each head with each other and by selecting a magnetic head producing high levels of a reproduced signal. And, the mode during recording can be estimated from the timing of switching magnetic heads 3 and the traveling speed of magnetic tape 1. For example, the tape speed is doubled in Fig. 17, then the timing of switching the magnetic heads becomes twice as fast as the original one, and the switching of the magnetic heads changes from 4 times per track into 2 times per track. In this way, the information about the mode during recording can be obtained, but reproducing the recorded system information is better to obtain the system information steadily.

A case where the bit rate of the original input signal is 9 Mbps was described above using Fig. 17. However, an input signal of 4 Mbps is similarly played back. Further, playback in other cases is similarly realized.

In Fig. 17, the same track is scanned several times (4 times) for playback, so that even if tracking is not accurate, information recorded on one track is obtained by one of 4 scans. Further, information recorded on one track can be composed by connecting pieces of information obtained by several scans. Therefore, rigorous tracking becomes unnecessary, and the control of the tape speed can be simplified.

Next, a recording and playback apparatus for digital signals of a fourth embodiment in accordance with the present invention is described in the following. The operations in recording modes of the fourth embodiment are almost the same as those in the first, second and the third embodiments such that magnetic heads perform recording once every n scans. The recorded tracks are continuous without any gap, and the azimuths of adjacent tracks are different.

The playback operations that play back a signal recorded in this way is described in the following.

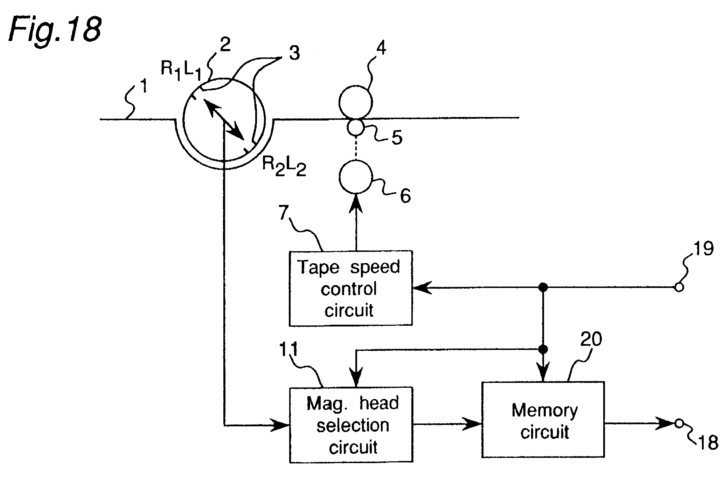

Fig. 18 is a playback block diagram of a recording and playback apparatus for digital signals of the fourth embodiment. If a component has the same function as in Fig. 1, the same symbol is used to denote it, and its redundant description is omitted.

In Fig. 18, the playback speed is set through a playback-speed instruction terminal 19, and an instruction signal of the set playback speed is input to tape-speed control circuit 7, a memory circuit 20, and magnetic-head selection circuit 11. Magnetic-head selection circuit 11 selects a magnetic head to be used from the magnetic-pairs 3a and 3b mounted in rotary cylinder 2, and the output signal reproduced by the selected head is input to memory circuit 20. Memory circuit 20 rearranges the reproduced signals so that the order becomes the same as in the input signal during recording. Then memory circuit 20 outputs the signal obtained by the rearrangement through output terminal 21. In Fig. 18, magnetic heads 3 mounted in rotary cylinder 2 are magnetic-head pairs (R1, L1) and (R2, L2), which are positioned opposite to each other at an angle of 180 degrees. Here, the relative heights of the magnetic heads R1, L1, R2, L2 are set so that they are at the same height on the recorded pattern.

Here, basic circuits, such as playback head-amps, demodulators, decoders, and error correction circuits required for playback of digital signals are omitted from the description.

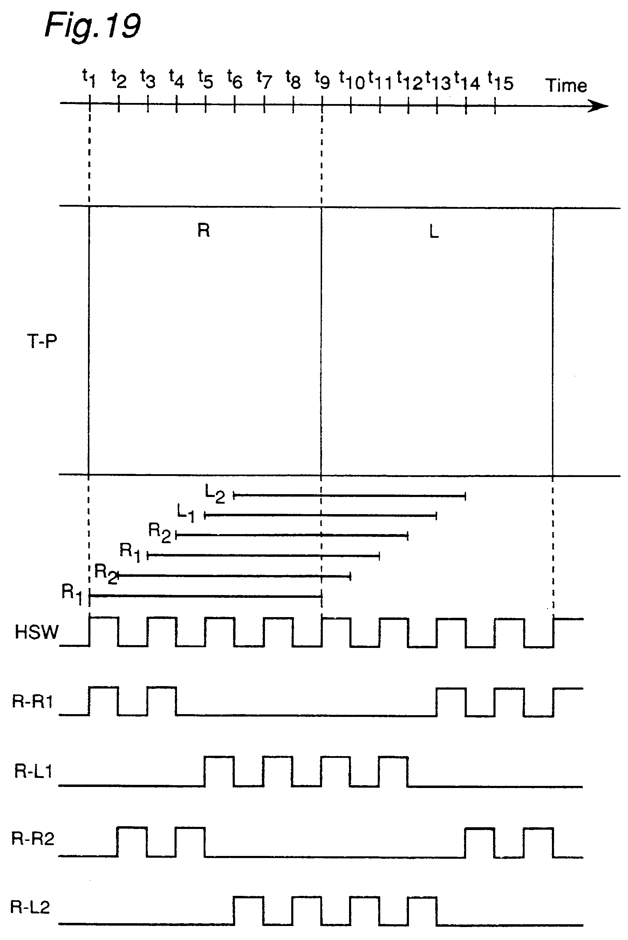

Figs. 19, 20, and 21 show the timing of operations in playback modes and track patterns on the magnetic tape traced by the magnetic heads in a recording and playback apparatus for digital signals of the present embodiment. Here, the recorded pattern was created by recording once every 8 scans of magnetic heads 3 (n = 8).

In Figs. 19, 20, and 30, T-P denotes recorded tracks. HSW denotes a head-switching signal corresponding to the magnetic-head pairs 3a, 3b and expresses phases of rotation of rotary cylinder 2. Signals R-R1, R-L1, R-R2, and R-L2 respectively express the timing of playback by the corresponding heads, R1, L1, R2, and L2, and each magnetic head is used for playback when the corresponding signal is at "H".

Fig. 19 shows a case of the same playback speed as the recording speed. At time t1, since the R-R1 signal is at "H", the magnetic head R1 of the magnetic-head pair 3a is used for playback. At time t2, since the R-R2 signal is at "H", the magnetic head R2 of the magnetic-head pair 3b is used for playback. Similarly, at time t3 and time t4, the magnetic heads R1 and R2 are respectively used for playback. At the time interval between time t5 and time t12, the magnetic head L1 of the magnetic-head pair 3a and the magnetic head L2 of the magnetic-head pair 3b are used for playback. Here, the same track is scanned several times (8 times), but only a reproduced signal such that recorded digital information is normally played back by a scan as a reproduced signal is used.

In Fig. 19, since playback is performed at the same speed as recording, the playback pattern is the same as the recording pattern. Therefore, digital information on the R-azimuth track on recorded tracks T-P is normally played back by a scan at time t1, so that digital information obtained by the rest of scans is not necessary, and the obtained digital information requires no rearrangement. Similarly, digital information on the L-azimuth track is normally played back by a scan at time t9, so that digital information obtained by the rest of scans is not necessary, and the obtained digital information requires no rearrangement.

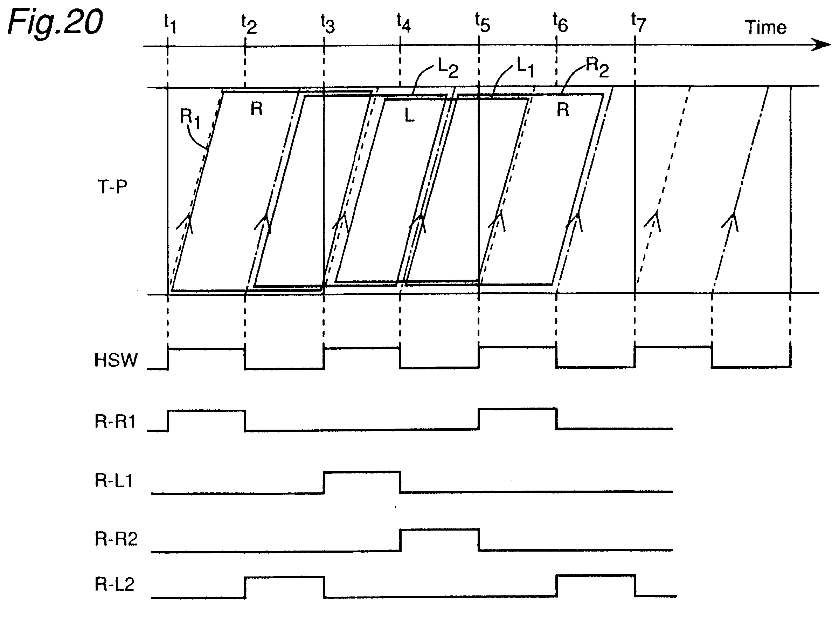

Fig. 20 shows a case of a playback speed of n/2 the recording speed (since n = 8, n/2 = 4), and the traveling speed of magnetic tape 1 during playback is n/2 the tape speed during recording. Therefore, the track pattern traced by the magnetic heads is different from the recorded track pattern.

At time t1, the HSW signal is at "H", so that the magnetic-head pair 3a scans magnetic tape 1. At this time, the azimuth of the recorded track on magnetic tape 1 is R, so that the R-R1 signal changes into "H", and the magnetic head R1 of the magnetic-head pair 3a is used for playback. Therefore, the trace pattern of the magnetic-head pair 3a becomes as shown by the short dashes.

At time t2, the HSW signal is at "L", so that the magnetic-head pair 3b scans magnetic tape 1. At this time, the azimuth of the recorded track on magnetic tape 1 is L, so that the R-L2 signal changes into "H", and the magnetic head L2 of the magnetic-head pair 3b is used for playback. Therefore, the trace pattern of the magnetic-head pair 3b becomes as shown by the short and long dashes.

At time t3, the HSW signal is at "H", so that the magnetic-head pair 3a scans magnetic tape 1. At this time, the azimuth of the recorded track on magnetic tape 1 is L, so that the R-L1 signal changes into "H", and the magnetic head L1 of the magnetic-head pair 3a is used for playback.

At time t4, the HSW signal is at "L", so that the magnetic-head pair 3b scans magnetic tape 1. At this time, the azimuth of the recorded track on magnetic tape 1 is R, so that the R-R2 signal changes into "H", and the magnetic head R2 of the magnetic-head pair 3b is used for playback. After time t5, the situation is the same as from time 1 to time t4.

In Fig. 20, an L-azimuth track is played back by both at time t2 and time t3 using the magnetic-head pairs 3b and 3a respectively. Therefore, digital information obtained from either one of the scans is used. R-azimuth tracks of T-P are the same. In this way, all digital information on a track is obtained by one scan, so that the obtained digital information does not require rearrangement by memory circuit 20.

Further, even if the tracing during playback shifts from the tracking position shown in Fig. 20, all digital information on a track is obtained by one of the two scans, so that the obtained digital information does not require rearrangement. Therefore, recorded digital information is obtained without rearrangement during playback in case the traveling speed of magnetic tape 1 is up to n/2 the tape speed during recording.

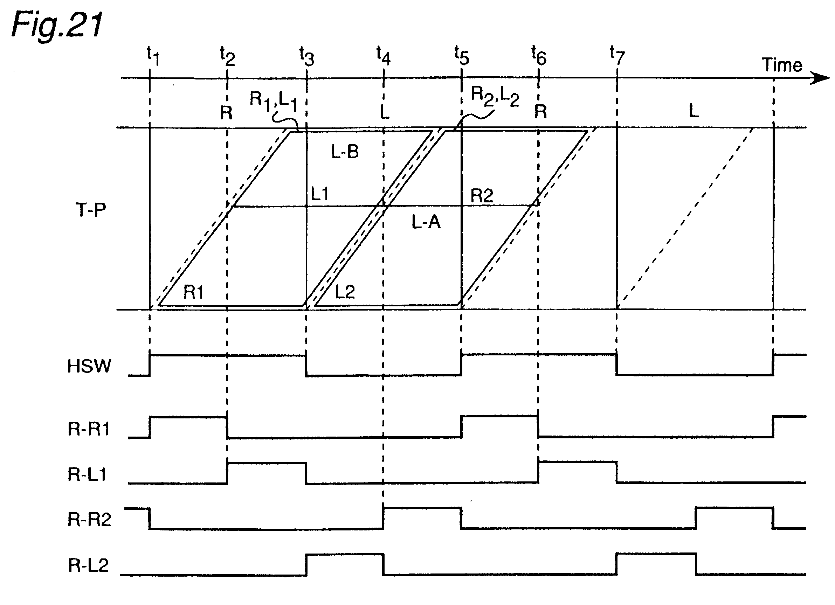

Fig. 21 shows a case of a playback speed of n times the recording speed (n = 8), and the traveling speed of magnetic tape 1 during playback is n times as fast as during recording. Therefore, the track pattern traced by the magnetic heads is different from the recorded track pattern.

At time t1, the HSW signal is at "H", so that the magnetic-head pair 3a scans magnetic tape 1. At this time, the azimuth of the recorded track on magnetic tape 1 is R, so that the R-R1 signal changes into "H", and the magnetic head R1 of the magnetic-head pair 3a is used for playback. However, because of high-speed playback, the track pattern traced by the magnetic-head pair 3a shifts from an R-azimuth track to an L-azimuth track as shown by the dashed line.

At time t2, the playback outputs of the magnetic head R1 and the magnetic head L1 of the magnetic-head pair 3a become the same, and after that the playback output of the magnetic head L1 becomes greater than the playback output of the magnetic head R1. Therefore, at time t2, the R-L1 signal changes into "H", and the used magnetic head of the magnetic-head-pair 3a is switched from R1 to L1. As a result, the portion L-B of the recorded track L is played back at the time interval between t2 and t3.

At time t3, the HSW signal is at "L", so that the magnetic-head pair 3b scans magnetic tape 1. At this time, the azimuth of the recorded track on magnetic tape 1 is L, so that the R-L2 signal changes into "H", and the magnetic head L2 of the magnetic-head pair 3b is used for playback. However, the track pattern traced by the magnetic-head pair 3b shifts from an L-azimuth track to an R-azimuth track, so that, at time t4, the R-R2 signal changes into "H", and the used magnetic head of the magnetic-head-pair 3b is switched from L2 to R2.

As a result, the portion L-A of the recorded track L is played back at the time interval between t3 and t4. Therefore, by connecting the portion L-B played back at the time interval between t2 and t3 to L-A, the whole recorded track L is played back. However, since the order of their playback is the reverse of the recorded order, the reproduced pieces of digital information have to be rearranged using a memory.

After time t5, the recorded digital information is reproduced as from time t1 to time t4.

If the tracing during playback shifts from the tracking position shown in Fig. 20, the time of switching the magnetic heads of the magnetic-head pairs 3a and 3b varies. Therefore, by connecting digital information played back by them, all digital information on a track is obtained. The rearranged digital information is the same as the recorded digital information, and rigorous tracking is unnecessary.

In the present embodiment, if the head width of the magnetic-head pairs 3a and 3b are made wider than the width of recorded tracks, then the playback speed at which all recorded digital information is obtained can be faster than n times the recording speed. In this case, the playback speed at which all recorded digital information is obtained without rearrangement can be faster than n/2 the recording speed.

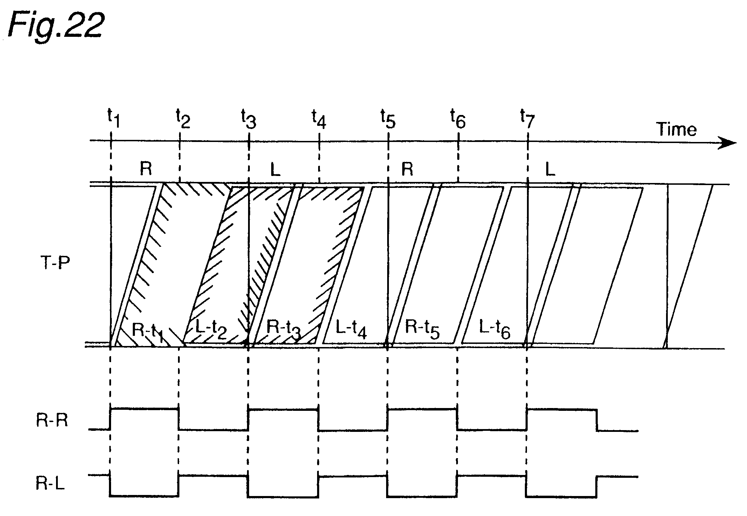

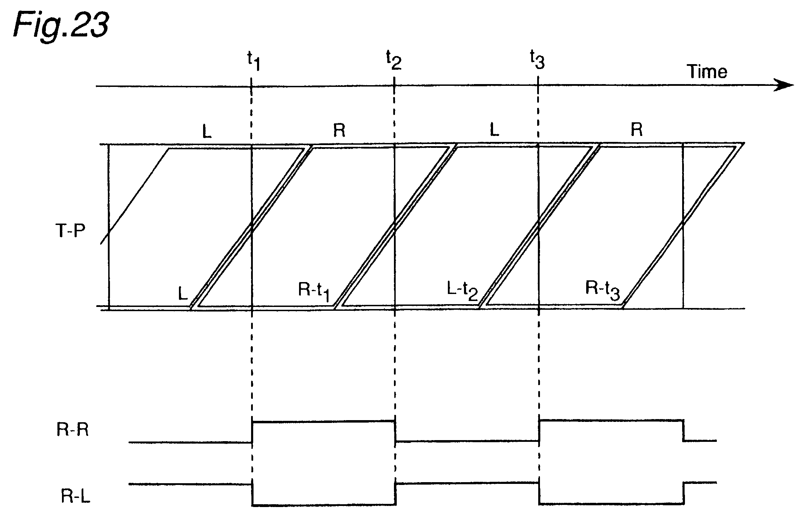

Figs. 22 and 23 show the timing of operations in playback modes and track patterns on the magnetic tape traced by the magnetic heads in a recording and playback apparatus for digital signals of the present embodiment. Here, magnetic heads 3 mounted in rotary cylinder 2 consist of two heads having different azimuths, one positioned opposite to the other at an angle of 180 degrees. The recorded track patterns were created by recording once every 7 scans of magnetic heads 3 (n = 7).

In Figs. 22 and 23, T-P denotes recorded tracks. Signals R-R and R-L respectively express the timing of playback by the corresponding heads, R and L of magnetic heads 3, and each magnetic head is used for playback when the corresponding signal is at "H".

Fig. 22 shows a case of a playback speed of n/2 the recording speed (since n = 7, n/2 = 3.5), and the traveling speed of magnetic tape 1 during playback is n/2 the tape speed during recording. Therefore, the track pattern traced by the magnetic heads is different from the recorded track pattern.

At time t1, the R-R signal is at "H", so that the magnetic head R of magnetic heads 3 scans magnetic tape 1. At this time the track pattern traced by the magnetic head R becomes R-t1, and since the azimuth of the recorded track on magnetic tape 1 is R, the whole R-azimuth track is played back by one scan of the magnetic head R.

At time t2, the R-L signal becomes "H", so that the magnetic head L of magnetic heads 3 is used for playback. At this time the track pattern traced by the magnetic head L becomes L-t2, and since the azimuth of the recorded track on magnetic tape 1 is L, the whole L-azimuth track is played back by one scan of the magnetic head L.

At time t3, and time t4, since the magnetic head R scans an L-azimuth track, and the magnetic head L scans an R-azimuth track, no played-back signal is obtained. At time t5 and time t6, the heads R and L of magnetic heads 3 scan an R-azimuth track and an L-azimuth track respectively as at time t1 and time t2.

As observed from Fig. 22, since the traces of the R-azimuth head of magnetic heads 3 at time t1, t3, t5 are continuous, the whole information of an R-azimuth track is played back independently of the tracking relation between magnetic heads 3 and magnetic tape 1. The same is true for an L-azimuth track. Further, if tracking is performed, all information recorded on a track is obtained with one scan, so that the obtained digital information does not require rearrangement by memory circuit 20.

Fig. 23 shows a case of a playback speed of n times the recording speed (n = 7), and the traveling speed of magnetic tape 1 during playback is n times the tape speed during recording. Therefore, the track pattern traced by the magnetic heads is different from the recorded track pattern.

At time t1, the R-R signal is at "H", so that the magnetic head R of magnetic heads 3 scans magnetic tape 1. and the track pattern traced by the magnetic head R becomes R-t1. At this time, since the azimuth of the recorded track on magnetic tape 1 is R, the magnetic head R is used to play back the recorded signal. Here, it is assumed that if a magnetic head traces more than half of a track of the same azimuth, then the playback of the recorded signal is well performed. Similarly, at time t2, the track pattern traced by the magnetic head L becomes L-t2, and an L-azimuth track of magnetic tape 1 is played back by the L-azimuth head of magnetic heads 3. After time t3, the situation is the repetition of the one at the time interval between time t1 and time t2. Therefore, if the tracking relation between magnetic heads 3 and magnetic tape 1 is as shown in Fig. 3, each recorded track is played back by one scan of magnetic heads 3.

If the tracking position shifts from the one shown in Fig. 23 during playback, part of recorded information is not played back, so that the tracking position has to be made optimal to avoid this problem.

If, in the present embodiment, the head width of magnetic heads 3 is made wider than the track width, then the tracking margin is greater in case of a playback speed of n times the recording speed.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A recording and playback apparatus for recording digital information on helical tracks of a magnetic tape, comprising
a rotary cylinder with at least one pair of magnetic head having respective azimuth angles different from each other, said rotary cylinder being driven at a constant rotational speed;
a tape-speed control means for controlling the traveling speed of said magnetic tape wrapped around said rotary cylinder in such a manner that, upon recording digital information input at a bit rate equal to (1/m) of a standard bit rate, said magnetic tape has a traveling speed equal to (1/n) of a standard traveling speed corresponding to said standard bit rate wherein m is a number equal to or larger than 2 and n is an integer not exceeding the number m;
a magnetic head selection means that selects a magnetic head from said at least one pair of magnetic heads during recording so that adjacent helical tracks have different recording azimuth angles; and
a recording means that records on said magnetic tape once every n scans of said magnetic heads upon recording digital information input at said bit rate equal to (1/m) of the standard bit rate.

2. The recording and playback apparatus for digital signals as defined in claim 1 wherein two magnetic heads, one having a different azimuth from the other and positioned opposite to the other at an angle of 180 degrees, are mounted in said rotary cylinder, n is an odd integer such that n ≧ 3.

3. The recording and playback apparatus for digital signals as defined in claim 1 wherein said recording means has a compression encoding means that encodes input digital information by varying the compression ratio of said input digital information depending on the tape speed determined by said tape-speed control means.

4. A recording and playback apparatus for digital signals, which are recorded on magnetic tape in the form of helical tracks, comprising a rotary cylinder that has at least one pair of magnetic heads, one head having a different azimuth from the other, a tape-speed control means that controls the traveling speed of said magnetic tape wrapped around said rotary cylinder, a magnetic-head selection means that selects a magnetic head from said magnetic heads during recording so that adjacent helical tracks have different recording azimuths, a first-mode recording means that moves the magnetic tape at a standard speed by said tape-speed control means and records digital information on said magnetic tape during each scan of said magnetic heads mounted in said rotary cylinder, and a second-mode recording means that records digital information of less amount than for the first mode on said magnetic tape once every n scans of said magnetic heads mounted in the said rotary cylinder, where n is an integer such that n ≧ 2.

5. The recording and playback apparatus for digital signals as defined in claim 4 wherein the rotational speed of said rotary cylinder in the first mode is almost the same as the one in the second recording mode.

6. The recording and playback apparatus for digital signals as defined in claim 5 wherein the amount of digital information for the second mode is the 1/n the amount of digital information for the first mode.

7. The recording and playback apparatus for digital signals as defined in claim 6 wherein said tape-speed control means moves said magnetic tape in the second mode at a traveling speed as fast as 1/n the traveling speed in the first mode.

8. The recording and playback apparatus for digital signals as defined in claim 7 wherein two magnetic heads, one having a different azimuth from the other and positioned opposite to the other at an angle of 180 degrees, are mounted in said rotary cylinder, said recording and playback apparatus for digital signals being characterized by the fact that recording is performed once every n scans of said magnetic heads, where n is an odd number such that n ≧ 3.

9. A recording and playback apparatus for digital signals, which are recorded on magnetic tape in the form of helical tracks, comprising a rotary cylinder that has at least one pair of magnetic heads, one head having a different azimuth from the other, a tape-speed control means that controls the traveling speed of said magnetic tape wrapped around said rotary cylinder, a magnetic-head selection means that selects a magnetic head from said magnetic heads during recording so that adjacent helical tracks have different recording azimuths, a bit-rate conversion means that converts input signals of a plurality of bit rates into digital information of a predetermined recording bit rate, and a recording means that records said digital information and system information about recording once every n scans of said magnetic heads depending on the bit rate of the input signal, where n is a positive integer.

10. The recording and playback apparatus for digital signals as defined in claim 9 wherein said system information about recording contains at least one of a piece of information about the scanning of said magnetic heads and a piece of information about the traveling speed of said magnetic tape.

11. The recording and playback apparatus for digital signals as defined in claim 10 wherein said system information about recording is recorded on an area selected from the group consisting of an area near the ID area, an area near the tracking information area, and an area in the middle of a helical track.

12. The recording and playback apparatus for digital signals as defined in claim 9 wherein the recording bit rate is set at the highest bit rate of a plurality of bit rates of input signals.

13. The recording and playback apparatus for digital signals as defined in claim 12 wherein the ratio of the bit rate of said input signal to the bit rate of the recorded signal is less than 1/n.

14. The recording and playback apparatus for digital signals as defined in claim 13 wherein said tape-speed control means determines the traveling speed of said magnetic tape depending on the bit rate of the input signal.

15. The recording and playback apparatus for digital signals as defined in claim 14 wherein two magnetic heads, one having a different azimuth from the other and positioned opposite to the other at an angle of 180 degrees, are mounted in said rotary cylinder, said recording and playback apparatus for digital signals being characterized by the fact that said recording means records on said magnetic tape once every n scans of said magnetic heads, where n is an odd number such that n ≧ 3.

16. A recording and playback apparatus for digital signals, which are recorded on magnetic tape in the form of helical tracks, comprising a rotary cylinder that has at least one pair of magnetic heads, one head having a different azimuth from the other, a tape-speed control means that controls the traveling speed of said magnetic tape wrapped around said rotary cylinder, a recording mode in which digital information is recorded once every n scans of said magnetic heads, where n is an integer such that n ≧ 2, and said magnetic tape is moved by said tape-speed control means at a predetermined speed so that successively recorded two tracks become contiguous to each other, a playback mode in which the rotational speed of said rotary cylinder is made almost the same as in said recording mode, and digital information is played back during each scan of said magnetic heads, and a magnetic-head selection means that selects a magnetic head that scans said magnetic tape in said recording mode and in said playback mode.

17. The recording and playback apparatus for digital signals as defined in claim 16 wherein said magnetic-head selection means selects a magnetic head from said magnetic heads during recording so that adjacent helical tracks have different recording azimuths,

18. The recording and playback apparatus for digital signals as defined in claim 17 wherein the head width of said magnetic heads is wider than the width of said helical tracks.

19. The recording and playback apparatus for digital signals as defined in claim 18 wherein two magnetic heads, one having a different azimuth from the other and positioned opposite to the other at an angle of 180 degrees, are mounted in said rotary cylinder, said recording and playback apparatus for digital signals being characterized by the fact that recording is performed once every n scans of said magnetic heads, where n is an odd number such that n ≧ 3.

20. The recording and playback apparatus for digital signals as defined in claim 19 having a memory means that rearranges digital information played back during each scan of said magnetic heads and characterized by the fact that said playback mode of up to n times the speed of said recording mode is realized based on the output of said memory means.

21. The recording and playback apparatus for digital signals as defined in claim 19 characterized by the fact that all recorded digital information is obtained from digital information played back by each scan of said magnetic heads without tracking in said playback mode at a speed up to n/2 the speed of said recording mode.
